Europäisches Patentamt

European Patent Office

Office européen des brevets

(19)

(11) **EP 0 581 622 B2**

(12) **NOUVEAU FASCICULE DE BREVET EUROPEEN**

(45) Date de publication et mention de la décision concernant l'opposition:
**02.05.2002 Bulletin 2002/18**

(45) Mention de la délivrance du brevet:
**27.08.1997 Bulletin 1997/35**

(21) Numéro de dépôt: **93401440.8**

(22) Date de dépôt: **07.06.1993**

(51) Int Cl.7: **C01B 25/37**, C01B 25/45, C09K 11/81

(54) **Procédé de préparation de phosphates de terres rares et produits obtenus**

Verfahren zur Herstellung von seltenen Erdenphosphaten und so erhaltene Produkte

Process for preparation of rare earth phosphates and products obtained thereby

(84) Etats contractants désignés:
**AT BE CH DE DK ES FR GB GR IE IT LI LU MC NL PT SE**

(30) Priorité: **29.07.1992 FR 9209356**

(43) Date de publication de la demande:
**02.02.1994 Bulletin 1994/05**

(73) Titulaire: **RHODIA CHIMIE
92408 Courbevoie Cédex (FR)**

(72) Inventeur: **Braconnier, Jean-Pierre
F-17140 Lagord (FR)**

(74) Mandataire: **Dubruc, Philippe et al
Rhodia Services,
Direction de la Propriété Industrielle,
40, rue de la Haie-Coq
93306 Aubervilliers Cedex (FR)**

(56) Documents cités:
EP-A- 0 456 936      EP-A- 0 456 937
EP-A- 0 456 938      EP-A- 0 498 689
EP-A- 0 524 034      EP-A- 0 581 621
DE-A- 2 729 105      DE-B- 3 326 921
DE-B- 3 348 146      GB-A- 2 124 243
US-A- 3 507 804      US-A- 4 447 756
US-A- 5 091 110

• CHEMICAL ABSTRACTS, vol. 83, no. 24, 15 Décembre 1975, Columbus, Ohio, US; abstract no. 201293k, page 565 ;

• CHEMICAL ABSTRACTS, vol. 96, no. 8, 22 Février 1982, Columbus, Ohio, US; abstract no. 54741t, page 153 ;
• CHEMICAL ABSTRACTS, vol. 91, no. 10, 3 Septembre 1979, Columbus, Ohio, US; abstract no. 82318a, page 537 ;
• Japanese Patent Laid-Open H4-13004 Specification , 1st May 1992
• "Koubutsu Gakkaishi", Journal of Mineralogy, Japan, Volume 19, No.3
• J.Inorg, Nucl.Chem. Vol.5, 133-140 (1957)
• "Shin Zikken Kagaku Koza" (New Experimental Chemistry Series)"Maruzen) Vol 8", "Synthesis of Inorganic Compounds(11)" P694 1977)publié en Mai 1984
• J.Lumin., Vols.48 & 49, 893-897, publié en 1961
• Japanese Patent Laid-Open 57-40853; published on 6th March 1982 with Amendment dated February 15,1985
• Japanese Patent Laid-Open 57-133182 published on 17th August 1982
• Keith H.Butler: Fluorescent Lamp Phosphors, Pennsylvania State University Press, 1980
• Technisches Datenblatt der Firma Nichia aus 1983
• Technisch-wissenschaftliche Abhandlungen der OSRAM-Gesellschaft Bd.12, 1986, p.470-474: F.Zwaschka, Stabilisierung des Leuchtstoffs LaCeTb-Phosphat durch grosse Kationen (Th,U)
• Mary Hoffman: Effect of Thorium on Ce3+Phosphors,J.Electrochemical Soc. 118, 1971, p 1508
• detaillierte Darstellung von E04 nach dem Coulter-Counter Verfahren

**Description**

La présente invention concerne un procédé de préparation de phosphates, mixtes ou simples, de terres rares, éventuellement additivés, et, à titre de produits industriels nouveaux et utiles, des phosphates de terres rares tels que notamment obtenus par ce procédé.

Elle concerne également l'utilisation de ces produits comme luminophores et/ou matrices pour luminophores, ou comme précurseurs de ces derniers.

Dans l'exposé qui suit de la présente invention, on entend par terres rares, les éléments appartenant à la famille des lanthanides ayant un numéro atomique compris entre 57 et 71, ainsi que l'yttrium de numéro atomique 39.

On sait déjà que les phosphates, mixtes ou simples, de terres rares qui présentent pour formule générale : $LnPO_4$, dans laquelle Ln désigne au moins une terre rare, sont des produits intéressants, notamment en raison de leurs propriétés optiques et plus particulièrement de luminescence.

Par luminescence, on désigne le phénomène consistant, pour un produit, à émettre des ondes électromagnétiques dans un spectre donné sous l'action d'une excitation monochromatique extérieure, elle même de longueur d'onde donnée.

Ces phosphates de terres rares peuvent, par ailleurs, et de manière connue en soi, être éventuellement additivés par certains éléments dopants (Na, Li, K, Th, B, ...) dans le but de promouvoir et/ou renforcer encore leur potentiel de luminescence.

Parmi les phosphates de terres rares les plus connus dans le domaine des luminophores, on peut citer notamment le phosphate de cérium, les phosphates d'yttrium et de cérium, les phosphates d'yttrium et de terbium, et les phosphates de lanthane, cérium et terbium.

Des luminophores à base de certains de ces produits sont déjà largement utilisés à l'échelle industrielle, notamment dans le domaine des lampes, comme par exemple le phosphate de LaCeTb.

Les méthodes de synthèse généralement décrites dans la littérature pour aboutir aux orthophosphates, mixtes ou simples, de terres rares, peuvent être, globalement, classées en deux grandes catégories principales, à savoir : (i) les procédés dits "par voie sèche" et (ii) les procédés dits par "voie humide".

Les procédés par voie sèche consistent à prendre un oxyde d'une terre rare ou à former un mélange entre des oxydes des différentes terres rares, ou bien encore à prendre un oxyde mixte desdites terres rares, et à réaliser une phosphatation de cet oxyde ou de ce mélange d'oxydes ou de cet oxyde mixte, par calcination en présence de phosphate diammonique (réaction type solide/solide).

Les procédés par voie humide consistent, quant à eux, à réaliser une synthèse directe, en milieu liquide, d'un phosphate, mixte ou simple, de terres rares ou d'un mélange de phosphates de terres rares, et ceci généralement par attaque d'un composé solide contenant la ou les terres rares (carbonate et/ou oxyde) au moyen d'une solution d'acide phosphorique pour précipiter les phosphates correspondants. On notera qu'il est également possible de réaliser la précipitation directe du phosphate à partir d'une solution de sels solubles de terres rares. Ainsi, dans la demande de brevet français déposée sous le n° 91 01215 et au nom de la Demanderesse, on a décrit un procédé de synthèse d'un phosphate mixte de terres rares consistant à mélanger une solution de sels solubles de lanthane, cérium et terbium avec des ions phosphates, et ceci avec un contrôle du pH du milieu de précipitation qui est maintenu à une valeur constante supérieure à 2, puis à laisser mûrir le précipité ainsi obtenu; bien que ce procédé permette, entre autres avantages, d'obvier de manière satisfaisante aux problèmes de filtration que l'on rencontre dans les voies classiques mettant en oeuvre une précipitation directe (obtention de gels ou de précipités se filtrant très mal), il conduit néanmoins à des produits dont la répartition granulométrique peut apparaître comme encore insuffisante, puisque l'indice de dispersion des particules constituant tant le précurseur phosphate mixte que le luminophore résultant, est supérieur à 0,5.

Tous les différents procédés ci-dessus, qu'ils reposent sur une voie sèche ou une voie humide, ont pour inconvénient commun majeur de conduire à des phosphates de terres rares présentant une granulométrie non controlée, en particulier une distribution granulométrique non resserrée ou, du moins, insuffisamment resserrée. Or, l'obtention de particules monodisperses à granulométrie uniforme et resserrée, constitue une caractéristique importante et recherchée pour la fabrication de luminophores performants, c'est à dire de luminophores d'une part faciles à mettre en oeuvre dans les lampes ou sur les écrans pour téléviseurs (revêtements en fines couches homogènes) et d'autre part présentant des propriétés de luminescence, notamment de brillance, optimales. En d'autres termes, et plus simplement, il a été constaté que la qualité du phosphate de départ conditionne de manière essentielle et décisive la qualité du luminophore final dans l'application désirée.

La présente invention a notamment pour but de résoudre le problème ci-dessus.

Elle vise ainsi à proposer un procédé qui permette d'accéder de manière simple, économique, reproductible et contrôlée, à des phosphates, mixtes ou simples, de terres rares présentant une granulométrie, et plus particulièrement une répartition granulométrique, améliorée, et donc particulièrement utiles en tant que luminophores et/ou matrices pour luminophores, ou en tant que précurseurs pour la préparation de ces derniers.

A cet effet, on a maintenant trouvé, et il s'agit là d'un des premiers objets de la présente invention, que ce but, et d'autres, pouvait être atteint au moyen d'un nouveau procédé de préparation de phosphates, mixtes ou simples, de terres rares de formule LnPO$_4$, dans laquelle Ln représente au moins un élément pris dans le groupe constitué par les lanthanides et l'yttrium, caractérisé en ce qu'il consiste à introduire, en continu et sous agitation, une première solution contenant des sels solubles de la ou des terres rares, dans une seconde solution contenant des ions phosphates et présentant un pH initial inférieur à 2, à contrôler au cours de la précipitation et de l'introduction de la première solution dans la seconde, le pH du milieu de précipitation à une valeur constante comprise entre 1 et 2, avec une variation autour de la valeur de consigne fixée d'au plus 0,1 unité de pH, puis à récupérer le précipité ainsi obtenu et enfin, éventuellement, à le traiter thermiquement.

On peut ainsi obtenir des phosphates de terre (s) rare(s) de formule générale LnPO$_4$ ci-dessus définie, lesdits phosphates présentant une taille moyenne de particules comprise entre 1 et 10 microns et un indice de dispersion inférieur à 0,5, ayant les propriétés définies dans la revendication 14.

De tels produits constituent un second objet de la présente invention.

Ces phosphates peuvent enfin, le cas échéant, être ultimement transformés en luminophores, et ceci au moyen de traitements thermiques appropriés et connus en soi, réalisés avec ou sans flux selon les cas, ces luminophores étant essentiellement caractérisés par le fait qu'ils ont conservé l'excellente distribution granulométrique des phosphates de départ, à savoir qu'ils présentent eux-aussi une taille moyenne de particules comprise entre 1 et 10 microns et un indice de dispersion inférieur à 0,5. Ces luminophores présentent, bien entendu, la même composition que leurs précurseurs à base de phosphates de terres rares.

Mais d'autres caractéristiques, aspects et avantages de l'invention apparaîtront encore plus clairement à la lecture de la description détaillée qui va suivre.

Pour des raisons liées à la clarté de l'exposé, on commencera par développer le procédé de synthèse des nouveaux phosphates de terres rares selon l'invention, ces derniers étant eux-mêmes décrits plus en détails par la suite.

Selon l'invention, on réalise une précipitation directe et à pH contrôlé d'un phosphate, mixte ou simple, de terres rares, et ceci en faisant réagir (i) une première solution contenant des sels solubles d'une ou plusieurs terres rares, ces éléments étant alors présents dans les proportions stoechiométriques requises pour l'obtention du produit de formule désirée, avec (i) une deuxième solution contenant des ions phosphates.

Selon une première caractéristique importante du procédé selon l'invention, un certain ordre d'introduction des réactifs doit être réspecté, et, plus précisemment encore, la solution de sels solubles de la ou des terres rares doit être introduite, progressivement et en continu, dans la solution contenant les ions phosphates.

Selon une deuxième caractéristique importante du procédé selon l'invention, le pH initial de la solution contenant les ions phosphates doit être inférieur à 2, et de préférence compris entre 1 et 2.

Selon une troisième caractéristique importante du procédé selon l'invention, le pH du milieu de précipitation doit ensuite être contrôlé à une valeur de pH inférieure à 2, et de préférence comprise entre 1 et 2.

Par "pH contrôlé", on entend un maintien du pH du milieu de précipitation à une certaine valeur, constante ou sensiblement constante, par addition de composés basiques ou de solutions tampons, dans la solution contenant les ions phosphates, et ceci simultanément à l'introduction dans cette dernière de la solution contenant les sels solubles de terres rares. Le pH du milieu variera ainsi d'au plus de 0,1 unité de pH autour de la valeur de consigne fixée. Le pH initial de la solution contenant les ions phosphates correspondra avantageusement à la valeur de consigne fixée.

Dans la présente invention, ce contrôle du pH est avantageusement réalisé par addition d'un composé basique comme cela sera expliqué ci-dessous.

La précipitation est réalisée de préférence en milieu aqueux à une température qui n'est pas critique et qui est comprise, avantageusement, entre la température ambiante (15°C - 25°C) et 100°C. Cette précipitation a lieu sous agitation du milieu de réaction.

Les concentrations des sels de terres rares dans la première solution peuvent varier dans de larges limites. Ainsi, la concentration totale en terres rares peut être comprise entre 0,01 mol/litre et 3 mol/litre.

Les sels de terres rares convenables pour l'invention sont notamment les sels solubles en milieu aqueux, comme par exemple les nitrates, chlorures, acétates, carboxylates, ou un mélange de ceux-ci. Les sels préférés selon l'invention sont les nitrates.

A titre de terres rares, on peut citer notamment l'yttrium, le lanthane, le gadolinium, le lutécium, le cérium et le terbium, cette liste n'étant bien entendu nullement limitative puisque, de fait, le procédé selon l'invention convient pour l'obtention de tout orthophosphate, mixte ou simple, de terres rares, dès lors qu'une granulométrie fine et extrêmemement resserée est recherchée pour ce produit. C'est ainsi que les phosphates de terres rares susceptibles d'être préparés selon l'invention sont notamment ceux déjà listés dans la partie introductive de la présente description.

On notera enfin que la solution de sels de terres rares peut comprendre en outre d'autres sels métalliques, comme par exemple des sels d'éléments alcalins, de thorium, de bore et autres, et ceci dans le but d'obtenir des phosphates de terres rares dopés avec d'autres éléments, comme cela est déjà connu de l'état de l'art pour promouvoir les propriétés de luminescence du phosphate final.

Les ions phosphates destinés à réagir avec la solution des sels de terres rares peuvent être apportés par des composés purs ou en solution, comme par exemple l'acide phosphorique, les phosphates d'alcalins ou d'autres éléments métalliques donnant avec les anions associés aux terres rares un composé soluble.

Selon un mode préféré de réalisation de l'invention, les ions phosphates sont ajoutés sous forme de phosphates d'ammonium car le cation ammonium se décomposera lors de la calcination ultérieure permettant ainsi d'obtenir un phosphate de terres rares de grande pureté. Parmi les phosphates d'ammonium, le phosphate diammonique ou monoammonique sont les composés préférés pour la mise en oeuvre de l'invention.

Les ions phosphates sont présents en quantité telle que l'on ait, entre les deux solutions, un rapport molaire $PO_4/Ln$ supérieur à 1, et avantageusement compris entre 1,1 et 3.

Comme souligné ci-avant dans la description, la solution contenant les ions phosphates doit présenter initialement (c'est à dire avant le début de l'introduction de la solution de sels de terres rares) un pH inférieur à 2, et de préférence compris entre 1 et 2. Aussi, si la solution utilisée ne présente pas naturellement un tel pH, ce dernier est amené à la valeur convenable désirée soit par ajout d'une base (par exemple de l'ammoniaque, dans le cas d'une solution initiale d'acide phosphorique) soit par ajout d'un acide (par exemple de l'acide nitrique, dans le cas d'une solution initiale de phosphate diammonique).

Par la suite, au cours de l'introduction de la solution contenant le ou les sels de terres rares, le pH du milieu de précipitation diminue progressivement; aussi, selon l'une des caractéristiques essentielles du procédé selon l'invention, dans le but de maintenir le pH du milieu de précipitation à la valeur constante de travail désirée, laquelle doit être comprise entre 1 et 2, on introduit simultanément dans ce milieu une base.

Comme composé basique convenable pour l'invention, on peut citer, à titre d'exemples, les hydroxydes métalliques (NaOH, KOH, CaOH2,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation.

Selon un mode préféré de réalisation de l'invention, ce composé basique est avantageusement un composé facilement éliminable soit avec la phase liquide du milieu réactionnel et lavage du précipité, soit par décomposition thermique lors de la calcination du phosphate.

Ainsi, le composé basique préféré de l'invention est l'ammoniac, mis en oeuvre avantageusement sous forme de solution aqueuse.

A l'issue de l'étape de précipitation, on obtient directement un phosphate, mixte ou simple, de terres rares, éventuellement additivé par d'autres éléments. La concentration globale en terres rares dans le milieu final de précipitation, est alors avantageusement supérieure à 0,25 mol/litre. Le précipité de phosphate peut être récupéré par tout moyen connu en soi, en particulier par simple filtration. En effet, dans les conditions du procédé selon l'invention, on précipite un phosphate de terres rares non gélatineux et aisément filtrable. Le produit récupéré peut ensuite être lavé, par exemple avec de l'eau, dans le but de le débarasser des éventuelles impuretés, notamment des groupements nitrates et/ou ammoniums adsorbés. Il peut enfin être traité thermiquement, et ceci sous diverses conditions choisies essentiellement en fonction du degré de transformation désiré pour le produit final (nature de la phase cristalline, degré d'hydratation, pureté, niveau de luminescence et autre), comme cela sera expliqué plus en détails dans ce qui suit. Avec ou sans mise en oeuvre de traitements thermiques ultérieurs, on notera que le procédé selon l'invention conduit toujours à des produits présentant une granulométrie fine et extrêmement resserrée.

De nouveaux phosphates de terres rares, tels que ceux susceptibles d'être obtenus selon le procédé ci-desus, constituent un second objet de la présente invention et vont donc maintenant être décrits plus en détails.

Les phosphates, mixtes ou simples, de terres rares conformes à l'invention répondent à la formule générale:

$$LnPO_4$$

dans laquelle Ln représente au moins une terre rare, et ils se caractérisent par le fait que les particules les constituant présentent une taille moyenne comprise entre 1 et 10 microns, de préférence entre 2 et 6 microns, et ceci avec un indice de dispersion inférieur à 0,5, de préférence inférieur à 0,4.

Les particules présentent une distribution en taille à la fois monodisperse et extrêmement resserrée autour de la valeur moyenne, résultat jamais atteint à ce jour pour ce type de produit.

Dans la formule ci-dessus, on notera que le rapport molaire $Ln/PO4$ est toujours égal à 1; en particulier, pour des phosphates de type mixtes, c'est le rapport molaire entre la somme de toutes les terres rares présentes et le phosphate, qui doit être égal à 1. A titre d'exemple, un phosphate de lanthane et cérium aura une formule du type : $[La_xCe_{(1-x)}]PO_4$.

Le diamètre moyen des particules est mesuré au moyen d'un granulomètre laser type CILAS (CILAS HR 850).

L'indice de dispersion I est quant à lui déterminé par la formule

$$I = \frac{\emptyset_{84} - \emptyset_{16}}{2\emptyset_{50}}$$

dans laquelle :

- $\emptyset_{84}$ est le diamètre des particules pour lequel 84% des particules ont un diamètre inférieur à $\emptyset_{84}$,

- $\emptyset_{16}$ est le diamètre des particules pour lequel 16% des particules ont un diamètre inférieur à $\emptyset_{16}$,

- et $\emptyset_{50}$ est le diamètre moyen des particules.

Ces orthophosphates de terres rares peuvent se présenter sous une forme cristalline de type soit hexagonale soit monoclinique, et ceci essentiellement en fonction de la température "vue" par les produits au cours de leur préparation.

Ainsi, plus précisemment, la forme hexagonale correspond aux phosphates soit n'ayant subi aucun traitement thermique ultérieur (par exemple un produit brut de précipitation) sort ayant subi un traitement thermique mais à une température n'excédant généralement pas 600°C, et la forme monoclinique correspond aux phosphates mixtes qui sont obtenus après un traitement thermique poussé et opéré à une température au moins supérieure à 600°C, avantageusement comprise entre 700 et 1000°C, dans le but de procéder à la transformation de la phase cristalline hexagonale en une phase pure monoclinique.

Un produit non traité thermiquement est généralement hydraté; toutefois, de simples séchages, opérés par exemple entre 60 et 100°C, suffisent à éliminer la majeure partie de cette eau résiduelle et à conduire à des phosphates de terres rares substantiellement anhydres, les quantités mineures d'eau réstante étant quant à elles éliminées par des calcinations conduites à des températures plus élevées et supérieures à 400°C environ.

Selon les températures auxquelles ils ont été calcinés, les phosphates selon l'invention peuvent contenir des quantités résiduelles d'ions ammonium plus ou moins importantes. Ainsi, avant calcination ou après calcination à une température inférieure à 500°C, ils contiennent généralement au plus 5% en poids d'ions ammonium, et de préférence au plus 2% en poids. Dans tous les cas, ces ions ammonium peuvent être éliminés par décomposition thermique ou évaporation, au cours de calcinations opérées à plus hautes températures, en particulier au delà de 600°C.

De même, les phosphates de terres rares de l'invention présentent des surfaces spécifiques variables selon les températures de calcination auxquelles ils ont été portés, celles-ci décroissant régulièrement avec ces dernières. Ainsi, à titre d'exemple, après traitement thermique à une température inférieure à 600°C, ils présentent une surface spécifique supérieure ou égale à 30 m2/g; après calcination à 800°C, cette surface est de l'ordre d'une dizaine de m2/g environ, et après calcination à 900-1000°C, elle chute à des valeurs généralement inférieures à environ 5 m2/g.

Dans ce qui précède, la surface spécifique est mesurée par la méthode B.E.T. qui est déterminée par adsorption d'azote conformément à la norme ASTM D3663-78 établie à partir de la méthode BRUNAUER-EMMETT-TELLER décrite dans le périodique "The Journal of the American Society", 60,309 (1938).

Les phosphates de terres rares de l'invention présentent en outre la propriété particulièrement remarquable et intéressante de ne pas motter lors de la calcination, c'est à dire que les particules les constituant ne sont pas, ou n'ont pas tendance à être, agglomérées et donc à se retrouver sous une forme finale de gros granules de taille de 0,1 à plusieurs mm par exemple; il n'est ainsi pas nécessaire de procéder à un broyage préalable des poudres avant de conduire sur celles-ci les traitements classiques destinés à l'obtention du luminophore final.

Enfin, comme indiqué ci-avant dans la description, les phosphates de terres rares selon l'invention peuvent également comprendre d'autres éléments jouant classiquement un rôle notamment de promoteur des propriétés de luminescence ou de stabilisateur des degrés d'oxydation des différents éléments terres rares; à titre d'exemples, on peut citer plus particulièrement les alcalins (Li, Na, K, ...), le thorium et le bore.

Bien que les phosphates de terres rares selon l'invention présentent, après avoir subi un traitement thermique à une température généralement supérieure à 600°C, et avantageusement comprise entre 700 et 1000°C, des propriétés de luminescence à des longueurs d'onde variables selon la composition du produit et après exposition à un rayon de longueur d'onde donné, il peut s'avérer nécessaire d'améliorer encore ces propriétés de luminescence en procédant sur les produits à des post-traitements, et ceci afin d'obtenir un véritable luminophore directement utilisable en tant que tel dans l'application souhaitée. Bien entendu, la frontière entre un simple phosphate de terres rares et un réel luminophore reste, somme toute, assez arbitraire, et dépend du seul seuil de luminescence à partir duquel on considère qu'un produit peut être directement mis en oeuvre de manière acceptable par un utilisateur. Dans le cas présent, et de manière assez générale, on peut considérer et identifier comme précurseurs de luminophores des phosphates de terres rares selon l'invention qui n'ont pas été soumis à des traitements thermiques supérieurs à environ 1000°C, car de tels produits présentent généralement des propriétés de luminescence que l'on peut juger comme ne satisfaisant pas au critère minimum de brillance des luminophores commerciaux susceptibles d'être utilisés directement et tels quels, sans aucune transformation ultérieure. A l'inverse, on peut qualifier de luminophores, les phosphates de terres rares qui, éventuellement après avoir été soumis à des traitements appropriés, développent des brillances convenables, et suffisantes pour être utilisés directement par un applicateur, par exemple dans des lampes ou des écrans de télévision.

Ainsi, pour développer encore leurs propriétés de luminescence, on peut soumettre les phosphates de terres rares de l'invention (précurseurs) à un traitement thermique sous "flux". On notera qu'un tel traitement est en lui-même déja bien connu en soi et est classiquement utilisé dans les procédés d'élaboration des principaux luminophores, notamment pour adapter ces derniers à l'application souhaitée (morphologie des particules, état de surface, brillance, par exemple).

A titre de flux convenables, on peut notamment citer le fluorure de lithium, le chlorure de lithium, le chlorure de potassium, le chlorure d'ammonium, l'oxyde de bore et les phosphates d'ammonium, cette liste n'étant bien entendu nullement limitative. Le flux est mélangé au phosphate mixte à traiter, puis le mélange est porté à une température supérieure à 1000°C, généralement comprise entre 1000°C et 1200°C, et ceci sous une atmosphère nécessairement réductrice. Après traitement, le produit est lavé puis rincé, de manière à obtenir un luminophore le plus pur possible et dans un état désaggloméré.

Dans d'autres cas, selon la composition des phosphates, on pourra également simplement traiter thermiquement les produits, et ceci en l'absence de tout flux, à une température supérieure à 1000°C, généralement comprise entre 1000 et 1200°C.

Que l'une ou l'autre des voies ci-dessus aient été utilisées, on obtient toujours finalement un luminophore à base de phosphate de terres rares, de structure cristalline de type monoclinique, présentant une taille moyenne de particules comprise entre 1 et 10 microns, de préférence entre 2 et 6 microns, et ceci avec un indice de dispersion très faible, inférieur à 0,5, de préférence inférieur à 0,4.

La taille moyenne et l'indice de dispersion des particules sont déterminés selon les méthodes indiquées ci-avant.

Des exemples concrets, destinés à illustrer l'invention dans ces divers aspects, vont maintenant être donnés, et ceci à titre indicatif et nullement limitatif.

Exemple 1

Dans 500 ml d'une solution d'acide phosphorique H3PO4, préalablement amenés à pH 1,4 par addition d'ammoniaque et portés à 60°C, sont ajoutés en une heure 500 ml d'une solution de nitrate de praséodyme dont la concentration est égale à 1,5 mol/l en praséodyme.

Le rapport molaire phosphate/Pr est de 1,15. Le pH au cours de la précipitation est régulé à 1,5 par addition d'ammoniaque.

A l'issue de l'étape de précipitation, le milieu réactionnel est encore maintenu une heure à 60°C.

Le précipité est ensuite aisément récupéré par filtration, lavé à l'eau puis séché à 60°C sous air. Le produit se présente alors sous la forme d'une poudre verte (texture apparente à celle d'un talc) constituée de particules (agglomérats) de 1 à 3 microns formées d'agrégats compacts d'environ 250 nm formés eux-mêmes par l'agrégation de cristallites élémentaires de tailles comprises entre 30 et 150 nm. La poudre est ensuite soumise à un traitement thermique à 900°C sous air.

L'analyse aux rayons X montre que le produit est un orthophosphate de praséodyme de structure cristalline monoclinique. Il est constitué de grains compacts d'environ 250 nm agglomérés sous forme de particules sphériques de tailles comprises entre 1 et 3 microns. La granulométrie CILAS, mesurée après désagglomération sommaire sous ultra-sons, donne un $\emptyset_{50}$ de 2,5 microns avec une répartition très resserrée puisque l'indice de dispersion est inférieur à 0,5.

Exemple 2

Dans une solution de phosphate monoammonique acidifiée à pH 1,5 par addition d'acide nitrique et portée à 60°C, est ajoutée en une heure une solution de nitrates d'yttrium de concentration égale à 0,5 mol/l. Le rapport molaire $PO_4/Y$ est de 1,1 et le pH au cours de la précipitation est régulé à 1,8 par addition d'une solution d'ammoniaque. A l'issue de l'étape de précipitation, le milieu réactionnel est encore maintenu une heure à 60°C.

Le précipité est ensuite aisément récupéré par filtration, puis lavé à l'eau. Il se présente sous la forme d'une poudre blanche (aspect d'un talc) correspondant à un orthophosphate d'yttrium hydraté de structure cristalline hexagonale. Sa teneur en matières volatiles est d'environ 77% en poids.

Le précipité est soumis à un traitement thermique à 900°C sous air. Cette calcination conduit à une fine poudre blanche de composition correspondant à un orthophosphate d'yttrium, avec une structure cristalline monoclinique, et constituée d'agglomérats de 5 à 15 microns. La granulométrie CILAS, mesurée après désagglomération sommaire du produit sous ultra-sons, donne un $\emptyset_{50}$ de 10 microns avec une répartition très resserrée puisque l'indice de dispersion est inférieur à 0,5.

Exemple 3

Dans 500 ml d'une solution d'acide phosphorique H3PO4, préalablement amenés à pH 1,4 par addition d'ammoniaque et portés à 60°C, sont ajoutés en une heure 500 ml d'une solution de nitrates de terres rares de concentration globale de 1,5 mol/l et se décomposant comme suit : 0,825 mol/l de La(NO3)3; 0,45 mol/l de Ce(NO3)3 et 0,225 mol/l de Tb(NO3)3.

Le rapport molaire phosphate/Terres Rares est de 1,15. Le pH au cours de la précipitation est régulé à 1,4 par addition d'ammoniaque.

A l'issue de l'étape de précipitation, le milieu réactionnel est encore maintenu une heure à 60°C.

Le précipité est ensuite aisément récupéré par filtration, lavé à l'eau puis séché à 60°C sous air. Le produit se présente alors sous la forme d'une poudre blanche (aspect d'un talc) constituée de particules (agglomérats) de 3 à 6 microns formées d'agrégats compacts d'environ 250 nm formés eux-mêmes par l'agrégation de. cristallites élémentaires de tailles comprises entre 30 et 150 nm. La poudre est ensuite soumise à un traitement thermique à 900°C sous air.

L'analyse aux rayons X montre que le produit est un orthophosphate de LaCeTb de structure cristalline monoclinique. Il est constitué de grains compacts d'environ 250 nm agglomérés sous forme de particules sphériques de tailles comprises entre 3 et 6 microns. La granulométrie CILAS, mesurée après désagglomération sommaire sous ultra-sons, donne un $\varnothing_{50}$ de 4,5 microns avec une répartition très resserrée puisque l'indice de dispersion est inférieur à 0,4.

## Revendications

1. Procédé de préparation d'un phosphate de terre(s) rare(s) de formule $LnPO_4$ dans laquelle Ln représente au moins un élément pris dans le groupe constitué par les lanthanides et l'yttrium, **caractérisé en ce qu'**il consiste à introduire, en continu et sous agitation, une première solution contenant des sels solubles de la ou des terres rares, dans une seconde solution contenant des ions phosphates et présentant un pH initial inférieur à 2, à contrôler au cours de la précipitation et de l'introduction de la première solution dans la seconde, le pH du milieu de précipitation à une valeur constante comprise entre 1 et 2, avec une variation autour de la valeur de consigne fixée d'au plus 0,1 unité de pH, puis à récupérer le précipité ainsi obtenu et enfin, éventuellement, à le traiter thermiquement.

2. Procédé selon la revendication 1, **caractérisé en ce** ledit pH initial est compris entre 1 et 2.

3. Procédé selon l'une des revendications 1 à 2, **caractérisé en ce que** le rapport molaire $PO_4/Ln$ entre les deux solutions est compris entre 1,1 et 3.

4. Procédé selon l'une des revendications 1à 3, **caractérisé en ce que** ledit pH constant de précipitation est égal audit pH initial.

5. Procédé selon l'une des revendications 1 à 4, **caractérisé en ce que** le contrôle du pH du milieu de précipitation est réalisé par addition d'un composé basique.

6. Procédé selon la revendication 5, **caractérisé en ce que** ledit composé basique est l'hydroxyde d'ammonium.

7. Procédé selon l'une des revendications 1 à 6, **caractérisé en ce que** lesdits ions phosphates sont sous forme d'une solution de phosphates d'ammonium.

8. Procédé selon la revendication 7, **caractérisé en ce que** lesdits phosphates d'ammonium sont choisis parmi le phosphate monoammonique et le phosphate diammonique.

9. Procédé selon l'une des revendications 1 à 6, **caractérisé en ce que** lesdits ions phosphates sont sous forme d'une solution d'acide phosphorique.

10. Procédé selon l'une des revendications 1 à 9, **caractérisé en ce que** la concentration totale en terres rares dans ladite première solution est comprise entre 0,25 mole/litre et 3 mole/litre.

11. Procédé selon l'une des revendications 1 à 10, **caractérisé en ce que** lesdits sels solubles de terres rares sont choisis, seuls ou en mélanges, parmi les nitrates, les chlorures, les acétates et les carboxylates.

12. Procédé selon la revendication 11, **caractérisé en ce que** l'on utilise des nitrates.

13. Procédé selon l'une des revendications à 12, **caractérisé en ce que** ladite première solution de sels solubles de terres rares contient en outre au moins un sel soluble d'un autre élément dans le but d'obtenir un phosphate de terres rares dopé par cet élément.

14. Un phosphate de terre(s) rare(s) de formule générale $LnPO_4$ dans laquelle Ln représente au moins un élément pris dans le groupe constitué par les lanthanides et l'yttrium, **caractérisé en ce que** les particules le constituant présentent une taille moyenne comprise entre 1 et 10 microns avec un indice de dispersion inférieur à 0,5 (granulométrie laser type CILAS), **en ce qu'**il présente une structure cristalline de type hexagonale et **en ce qu'**après calcination à une température entre 1000°C et 1200°C et sans broyage les particules la constituant présentent également une taille moyenne comprise entre 1 et 10 microns avec un indice de dispersion inférieur à 0,5 (granulométrie laser type CILAS).

15. Un phosphate de terre(s) rare(s) selon la revendication 14, **caractérisé en ce qu'**il est à l'état non calciné ou **en ce qu'**il a subi une calcination à une température d'au plus 1000°C.

16. Un phosphate de terre(s) rare(s) selon la revendication 15, **caractérisé en ce qu'**il présente une structure cristalline de type monoclinique.

17. Phosphate selon l'une des revendications 14 à 16 **caractérisé en ce que** ladite taille moyenne est comprise entre 1 et 6 microns.

**18.** Phosphate selon l'une des revendications 14 à 17 **caractérisé en ce que** ladite taille moyenne est comprise entre 2 et 6 microns.

**19.** Phosphate selon l'une des revendications 14 à 18, **caractérisé en ce que** l'indice de dispersion est inférieur à 0,4.

**20.** Phosphate selon l'une des revendications 14 à 19, **caractérisé en ce qu'**il est à l'état anhydre.

**21.** Phosphate selon l'une des revendications 15 à 20, **caractérisé en ce qu'**il présente une structure cristalline de type hexagonale.

**22.** Phosphate selon l'une des revendications 15 à 20, **caractérisé en ce qu'**il présente une structure cristalline de type monoclinique.

**23.** Phosphate selon l'une des revendications 14 à 22, **caractérisé en ce qu'**il contient moins de 5% en poids, de préférence moins de 2% en poids, d'ions ammonium.

**24.** Phosphate selon l'une des revendications 14 à 23, **caractérisé en ce qu'**il contient. en outre au moins un élément dopant destiné à renforcer ses propriétés de luminescence.

**25.** Utilisation d'un phosphate de terre(s) rare(s) tel que défini à l'une quelconque des revendications 14 à 24 pour la fabrication d'un luminophore.

**26.** Luminophore de formule générale $LnPO_4$ dans laquelle Ln représente au moins un élément pris dans le groupe constitué par les lanthanides et l'yttrium, **caractérisé en ce qu'**il est obtenu par calcination à une température supérieure à 1000°C et sans broyage d'un phosphate selon l'une des revendications 14 à 24.

**Claims**

**1.** Process for producing a phosphate based on one or more rare earths of formula $LnPO_4$, in which Ln represents at least one element taken from the group consisting of the lanthanides and yttrium, **characterized in that** it consists in introducing, continuously and with stirring, a first solution containing soluble salts of the rare earth(s), into a second solution containing phosphate ions and having an initial pH of less than 2, in controlling, during the precipitation and the introduction of the first solution into the second, the pH of the precipitation medium to a constant value of between 1 and 2, with a variation around the fixed setpoint value of at most 0.1 pH unit, then in recovering the precipitate thus obtained and finally, optionally, in heat-treating it.

**2.** Process according to Claim 1, **characterized in that** the said initial pH is between 1 and 2.

**3.** Process according to either of Claims 1 and 2, **characterized in that** the $PO_4$/Ln molar ratio between the two solutions is between 1.1 and 3.

**4.** Process according to one of Claims 1 to 3, **characterized in that** the said constant precipitation pH is equal to the said initial pH.

**5.** Process according to one of Claims 1 to 4, **characterized in that** the pH of the precipitation medium is controlled by addition of a basic compound.

**6.** Process according to Claim 5, **characterized in that** the said basic compound is ammonium hydroxide.

**7.** Process according to one of Claims 1 to 6, **characterized in that** the said phosphate ions are in the form of a solution of ammonium phosphates.

**8.** Process according to Claim 7, **characterized in that** the said ammonium phosphates are chosen from monoammonium phosphate and diammonium phosphate.

**9.** Process according to one of Claims 1 to 6, **characterized in that** the said phosphate ions are in the form of a phosphoric acid solution.

**10.** Process according to one of Claims 1 to 9, **characterized in that** the total concentration of rare earths in the said first solution is between 0.25 mol/litre and 3 mol/litre.

**11.** Process according to one of Claims 1 to 10, **characterized in that** the said soluble salts of rare earths are chosen, by themselves or as mixtures, from nitrates, chlorides, acetates and carboxylates.

**12.** Process according to Claim 11, **characterized in that** nitrates are used.

**13.** Process according to one of Claims 1 to 12, **characterized in that** the said first solution of soluble salts of rare earths furthermore contains at least one soluble salt of another element for the purpose of obtaining a phosphate of rare earths which is doped by this element.

**14.** Phosphate based on one or more rare earths of general formula $Ln/PO_4$, in which Ln represents at least one element taken from the group consisting of the lanthanides and yttrium, **characterized in that** the particles of which it is composed have a mean size of between 1 and 10 microns with a dispersion index of less than 0.5 (CILAS-type laser particle size analysis), **in that** it has a crystal structure of hexagonal type and **in that**, after calcination at a temperature of between 1000°C and 1200°C and with no grinding, the particles of which it is composed also have a mean size of between 1 and 10 µm with a dispersion index of less than 0.5 (CILAS-type laser particle size analysis).

15. Phosphate based on one or more rare earths according to Claim 14, **characterized in that** it is in the non-calcined state or **in that** it has undergone calcination at a temperature of at most 1000°C.

16. Phosphate based on one or more rare earths according to Claim 15, **characterized in that** it has a crystal structure of monoclinic type.

17. Phosphate according to one of Claims 14 to 16, **characterized in that** the said mean size is between 1 and 6 microns.

18. Phosphate according to one of Claims 14 to 17, **characterized in that** the said mean size is between 2 and 6 microns.

19. Phosphate according to one of Claims 14 to 18, **characterized in that** the dispersion index is less than 0.4.

20. Phosphate according to one of Claims 14 to 19, **characterized in that** it is in the anhydrous state.

21. Phosphate according to one of Claims 15 to 20, **characterized in that** it has a crystal structure of hexagonal type.

22. Phosphate according to one of Claims 15 to 20, **characterized in that** it has a crystal structure of monoclinic type.

23. Phosphate according to one of Claims 14 to 22, **characterized in that** it contains less than 5% by weight, preferably less than 2% by weight, of ammonium ions.

24. Phosphate according to one of Claims 14 to 23, **characterized in that** it furthermore contains at least one doping element intended to enhance its luminescence properties.

25. Use of a phosphate based on one or more rare earths, as defined in any one of Claims 14 to 24, for the manufacture of a phosphor.

26. Phosphor of general formula LnPO$_4$, in which n represents at least one element taken from the group consisting of the lanthanides and yttrium, **characterized in that** it is obtained by calcining, at a temperature above 1000°C, and without grinding, a phosphate according to one of Claims 14 to 24.

**Patentansprüche**

1. Verfahren zur Herstellung eines Phosphats eines oder mehrerer Seltenerdelemente der Formel LnPO$_4$, in welcher Ln für mindestens ein Element, ausgewählt aus der Gruppe, gebildet aus den Lanthaniden und Yttrium, steht, **dadurch gekennzeichnet, dass** es daraus besteht, kontinuierlich und unter Rühren eine erste Lösung, die lösliche Salze des Seltenerdelements oder der Seltenerdelemente enthält, einer zweiten Lösung, die Phosphationen enthält und einen anfänglichen pH-Wert unter 2 aufweist, zuzugeben, während der Präzipitation und der Zugabe der ersten Lösung zu der zweiten den pH-Wert des Präzipitationsmediums auf einen konstanten Wert, der zwischen 1 und 2 liegt, mit einer Variation um den festgelegten Vorschriftswert von höchstens 0,1 pH-Einheit, einzustellen, dann das so erhaltene Präzipitat wiederzugewinnen und dieses zuletzt gegebenenfalls wärmezubehandeln.

2. Verfahren nach Anspruch 1, **dadurch gekennzeichnet, dass** der anfängliche pH-Wert zwischen 1 und 2 liegt.

3. Verfahren nach einem der Ansprüche 1 bis 2, **dadurch gekennzeichnet, dass** das molare Verhältnis von PO$_4$/Ln zwischen den zwei Lösungen zwischen 1,1 und 3 liegt.

4. Verfahren nach einem der Ansprüche 1 bis 3, **dadurch gekennzeichnet, dass** der konstante pH-Wert der Präzipitation gleich dem genannten anfänglichen pH-Wert ist.

5. Verfahren nach einem der Ansprüche 1 bis 4, **dadurch gekennzeichnet, dass** die Steuerung des pH-Werts des Präzipitationsmediums durch Zugabe einer basischen Verbindung ausgeführt wird.

6. Verfahren nach Anspruch 5, **dadurch gekennzeichnet, dass** die basische Verbindung Ammoniumhydroxid ist.

7. Verfahren nach einem der Ansprüche 1 bis 6, **dadurch gekennzeichnet, dass** die Phosphationen in Form einer Lösung von Ammoniumphosphaten vorliegen.

**8.** Verfahren nach Anspruch 7, **dadurch gekennzeichnet, dass** die Ammoniumphosphate ausgewählt werden aus Monoammoniumphosphat und Diammoniumphosphat.

**9.** Verfahren nach einem der Ansprüche 1 bis 6, **dadurch gekennzeichnet, dass** die Phosphationen in Form einer Lösung von Phosphorsäure vorliegen.

**10.** Verfahren nach einem der Ansprüche 1 bis 9, **dadurch gekennzeichnet, dass** die Gesamtkonzentration an Seltenerdelementen in der ersten Lösung zwischen 0,25 Mol/l und 3 Mol/l liegt.

**11.** Verfahren nach einem der Ansprüche 1 bis 10, **dadurch gekennzeichnet, dass** die löslichen Salze von Seltenerdelementen als Einzelverbindungen oder in Form von Mischungen aus den Nitraten, den Chloriden, den Acetaten und den Carboxylaten ausgewählt werden.

**12.** Verfahren nach Anspruch 11, **dadurch gekennzeichnet, dass** man Nitrate verwendet.

**13.** Verfahren nach einem der Ansprüche 1 bis 12, **dadurch gekennzeichnet, dass** die erste Lösung von löslichen Salzen von Seltenerdelementen darüber hinaus mindestens ein lösliches Salz eines anderen Elements enthält mit dem Ziel, ein Phosphat von Seltenerdelementen zu erhalten, das mit diesem Element dotiert ist.

**14.** Phosphat eines oder mehrerer Seltenerdelemente der allgemeinen Formel $LnPO_4$, in der Ln für mindestens ein Element, ausgewählt aus der Gruppe, gebildet aus den Lanthaniden und Yttrium, steht, **dadurch gekennzeichnet, dass** die Teilchen, die dieses bilden, eine mittlere Größe zwischen 1 und 10 μm mit einem Dispersionsindex unter 0,5 (Körnchengrößenbestimmung vom Lasertyp CILAS) aufweisen, dass dieses eine kristalline Struktur vom hexagonalen Typ aufweist und dass nach Kalzinierung bei einer Temperatur, die zwischen 1000°C und 1200°C liegt, und ohne Mahlen die Teilchen, welche dieses bilden, ebenso eine mittlere Größe zwischen 1 und 10 um mit einem Dispersionsindex unter 0,5 (Körnchengrößenbestimmung vom Lasertyp CILAS) aufweisen.

**15.** Phosphat eines oder mehrerer Seltenerdelemente nach Anspruch 14, **dadurch gekennzeichnet, dass** es in einem nicht kalzinierten Zustand vorliegt oder dass es einer Kalzinierung bei einer Temperatur von höchstens 1000°C unterzogen wurde.

**16.** Phosphat eines oder mehrerer Seltenerdelemente nach Anspruch 15, **dadurch gekennzeichnet,**

**dass** es eine Kristallstruktur vom monoklinen Typ aufweist.

**17.** Phosphat nach einem der Ansprüche 14 bis 16, **dadurch gekennzeichnet, dass** die mittlere Größe zwischen 1 und 6 μm beträgt.

**18.** Phosphat nach einem der Ansprüche 14 bis 17, **dadurch gekennzeichnet, dass** die mittlere Größe zwischen 2 und 6 μm beträgt.

**19.** Phosphat nach einem der Ansprüche 14 bis 18, **dadurch gekennzeichnet, dass** der Dispersionsindex unter 0,4 beträgt.

**20.** Phosphat nach einem der Ansprüche 14 bis 19, **dadurch gekennzeichnet, dass** es in wasserfreiem Zustand ist.

**21.** Phosphat nach einem der Ansprüche 15 bis 20, **dadurch gekennzeichnet, dass** es eine Kristallstruktur vom hexagonalen Typ aufweist.

**22.** Phosphat nach einem der Ansprüche 15 bis 20, **dadurch gekennzeichnet, dass** es eine Kristallstruktur vom monoklinen Typ aufweist.

**23.** Phosphat nach einem der Ansprüche 14 bis 22, **dadurch gekennzeichnet, dass** es weniger als 5 Gew.-%, vorzugsweise weniger als 2 Gew.-% Ammoniumionen enthält.

**24.** Phosphat nach einem der Ansprüche 14 bis 23, **dadurch gekennzeichnet, dass** es darüber hinaus mindestens ein Dotierungselement enthält, das dazu bestimmt ist, dessen Lumineszenzeigenschaften zu verstärken.

**25.** Verwendung eines Phosphats eines oder mehrerer Seltenerdelemente, wie in einem der Ansprüche 14 bis 24 definiert, zur Herstellung eines Luminophors.

**26.** Luminophor der allgemeinen Formel $LnPO_4$, in der Ln für mindestens ein Element, ausgewählt aus der Gruppe, gebildet aus den Lanthaniden und Yttrium, steht, **dadurch gekennzeichnet, dass** es durch Kalzinierung eines Phosphats nach Anspruch 14 bis 24 bei einer Temperatur über 1000°C und ohne Mahlen erhalten wird.